# EUROPEAN PATENT APPLICATION

(11) **EP 4 752 597 A1**
(43) Date of publication of application: **03.06.2026**
(21) Application number: 24215860.8
(22) Date of filing: 27.11.2024
(51) Int. Cl.: G01S 13/00, G01S 13/72, G01S 13/87, G01S 13/931, G01S 7/35, G01S 7/03, G01S 13/34, G01S 7/02, G01S 7/40

(54) **A METHOD IN A VEHICLE RADAR SYSTEM**

(71) Applicant: Magna Electronics Sweden AB, 447 37 Vårgårda (SE)
(72) Inventor: Moss, Jonathan, Unterschleissheim (DE)
(74) Representative: Westpatent AB

(57) **Abstract**

The present disclosure relates to a method performed by a processor arrangement (115, 125) in a vehicle radar system (101) . The method comprises generating and transmitting (S100) radar signals (102) using a first radar transceiver (110), a second radar transceiver (120), a first antenna arrangement (111) and a second antenna arrangement (121), and receiving (S200) radar signals (103) associated with detections (104; 104a, 104b, 104c, 104d) that are associated with a first domain (R₁) and detections (204; 204a, 204b, 204c, 204d, 204e, 204f) associated with a second domain (R₂), at least partly separate from the first domain (R₁), using the antenna arrangements (111, 121) and the radar transceivers (110, 120). The method further comprises transferring (S400), from the first radar transceiver (110) to the second radar transceiver (120), receiver channel data related to detections (204; 204a, 204b, 204c, 204d, 204e) associated with the second domain (R₂), processing (S500), at the first radar transceiver (110), the available receiver channel data related to the detections (104; 104a, 104a 104b, 104c) associated with the first domain (R₁), and processing (S600), at the second radar transceiver (120), the available receiver channel data related to the detections (204; 204a, 204b, 204c, 204d, 204e, 204f) associated with the second domain (R₂).

## Description

The present disclosure relates to a method performed by a processor arrangement in a vehicle radar system. The method comprises generating and transmitting radar signals using a first radar transceiver, a second radar transceiver, a first antenna arrangement and a second antenna arrangement. The method further comprises receiving radar signals associated with detections that are associated with a first domain and detections that are associated with a second domain, at least partly separate from the first domain, using the antenna arrangements and the radar transceivers.

A vehicle radar system comprises means for generating radar signals that are transmitted, reflected and received by means of appropriate antennas comprised in the radar system. The signal may for example comprise so-called chirp ramps in an FMCW (Frequency Modulated Continuous Wave) signal with a certain amplitude where the frequency is continuously ramped between two values, the chirp signal thus being in the form of a continuous sinusoid where the frequency varies from a first low frequency to a second high frequency over the course of the ramp. Other modulations are of course possible.

There exist on the market a range of single-chip radars which comprise both a radar and processing circuitry on one Monolithic Microwave Integrated Circuit (MMIC). These are often referred to as a System on Chip (SoC). Such SoCs typically have up to 4 Tx channels and 4 Rx channels.

It is desired to increase the performance of radar systems, both regarding range, angular resolution and interference. It is also desired to increase versatility, for example regarding signal generation and signal processing, while keeping the cost low.

For this reason it is beneficial to use two such SoCs in a vehicle radar system. The SoCs can be connected such that they operate using an identical RF chirp frequency signal, thus allowing the radar to effectively have 8 Rx channels that can receive at the same time, as if the SoC had 8 Rx channels. This is sometimes referred to as cascade operation. The transmissions could in that case come from one or more Tx channels output from either the first SoC, the second SoC or both SoCs.

Both SoCs are able to capture the signals from their respective antennas, and to process them to create two detection clouds. The problem is therefore how to combine the signals at a low level when the processing is performed on two separate chips.

It would not be possible to transfer the raw data to one of the SoCs as there would not be enough memory or processing capacity to process both sets. There is also not a fast enough link to send the raw ADC data from one SOC to the other; there are normally only relatively slow data links between the SoCs.

It would also not be desired to add a third dedicated processor chip as this would increase the HW costs and introduce a new component.

The object of the present disclosure is to provide a method for generating, transmitting and receiving radar signals using a first radar transceiver, a second radar transceiver, a first antenna arrangement and a second antenna arrangement that does not suffer from the above problems.

This object is obtained by means of a method performed by a processor arrangement in a vehicle radar system. The method comprises generating and transmitting radar signals using a first radar transceiver, a second radar transceiver, a first antenna arrangement and a second antenna arrangement, and receiving radar signals associated with detections that are associated with a first domain and detections that are associated with a second domain, at least partly separate from the first domain, using the antenna arrangements and the radar transceivers. The method further comprises transferring, from the first radar transceiver to the second radar transceiver, receiver channel data related to detections associated with the second domain, and processing, at the first radar transceiver, the available receiver channel data related to the detections associated with the first domain. The method also comprises processing, at the second radar transceiver, the available receiver channel data related to the detections associated with the second domain.

In this way, the radar transceivers share one subset of the detections, which in this enables one radar transceiver, in this case the second radar transceiver, to double-check the detections that belong to a certain domain, in this case the second domain.

According to some aspects, the method further comprises transferring, from the second radar transceiver to the first radar transceiver, receiver channel data related to detections associated with the first domain.

In this way, the radar transceivers share subsets of the detections, which enables each radar transceivers to double-check the detections that belong to a certain domain.

According to some aspects, the processing at the first radar transceiver comprises combining the detections associated with the first domain such that one or more possible detected objects associated with the first domain can be identified. Furthermore, the processing at the second radar transceiver comprises combining the detections associated with the second domain such that one or more possible detected objects associated with the second domain can be identified.

This means that the detections associated with the first and second domains, both from the first radar transceiver and the second radar transceiver, are combined at the first and second radar transceivers so as to form corresponding objects. This way, false detections can be identified and removed and the real objects remain.

According to some aspects, the processing at the first radar transceiver comprises tracking identified objects associated with the first domain, and the processing at the second radar transceiver comprises tracking identified objects associated with the second domain. This means that the tracking can be divided between the radar transceivers such that they handle one domain each.

According to some aspects, the first domain relates to a first range interval from the radar transceivers, and the second domain relates to a second range interval from the radar transceivers, where the second range interval is farther away from the radar transceivers than the first range interval.

According to some aspects, the first domain is related to a first Doppler interval, and where the second domain is related to a second Doppler interval.

This means that the domains can be formed in different ways, such that the needs at hand can be taken care of.

According to some aspects, the method further comprises lowering detection thresholds from a default value before receiving radar signals. This means that for longer range target objects, the detection threshold could be lowered such that weaker target objects are still found

This object is also obtained by means of vehicle radar systems, vehicles, processor arrangements and computer programs that are associated with the above advantages.

### BRIEF DESCRIPTION OF THE DRAWINGS

The present disclosure will now be described more in detail with reference to the appended drawings, where:
- Figure 1: shows a schematic top view of a vehicle;
- Figure 2: schematically illustrates a simplified schematic of a vehicle radar system;
- Figure 3A: shows a schematic view of detections at a first radar transceiver in a Range-Doppler representation;
- Figure 3B: shows a schematic view of detections at a second radar transceiver in a Range-Doppler representation;
- Figure 4: illustrates methods according to the present disclosure;
- Figure 5: schematically illustrates a processor unit; and
- Figure 6: schematically illustrates a computer program product.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

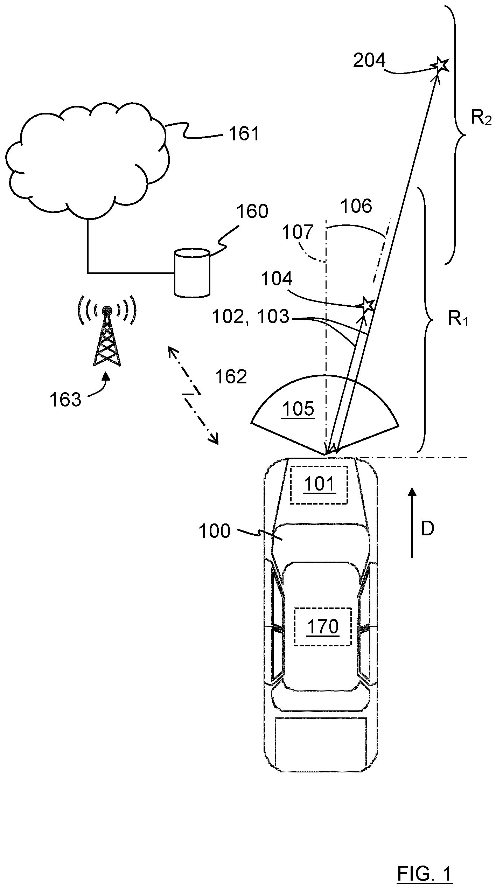

Figure 1 shows a vehicle 100 that has a forward running direction D and is equipped with a vehicle radar system 101. Some parts of the radar system functionality may even be comprised in a remote server 160 or cloud-based resource 161 connected to the vehicle 100 via wireless link 162, for example via a communication system 163.

According to an example, the vehicle radar system 101 is arranged for generating and transmitting radar signals in the form of frequency modulated continuous wave (FMCW) signals 102, sometimes also referred to as radar chirp signals, and to receive reflected radar signals 103, where the transmitted signals 102 have been reflected by an object 104.

The present disclosure is not limited to FMCW radar waveforms. Rather, the general concepts and techniques disclosed herein can be adapted and applied to many different radar waveforms.

The vehicle radar system 101 is associated with an effective field of view 105 and by means of signal processing, range and target angle 106 relative a reference line 107, to detected objects 104 can be determined.

As noted above, the vehicle radar system may be connected via wireless link 162 to a remote server 160, which in turn may be comprised in a cloud-based resource 161 or remote network. This server 160 and network may be configured to assist the vehicle 100 in performing various operations such as radar signal processing, interference mitigation, beamforming, and the like.

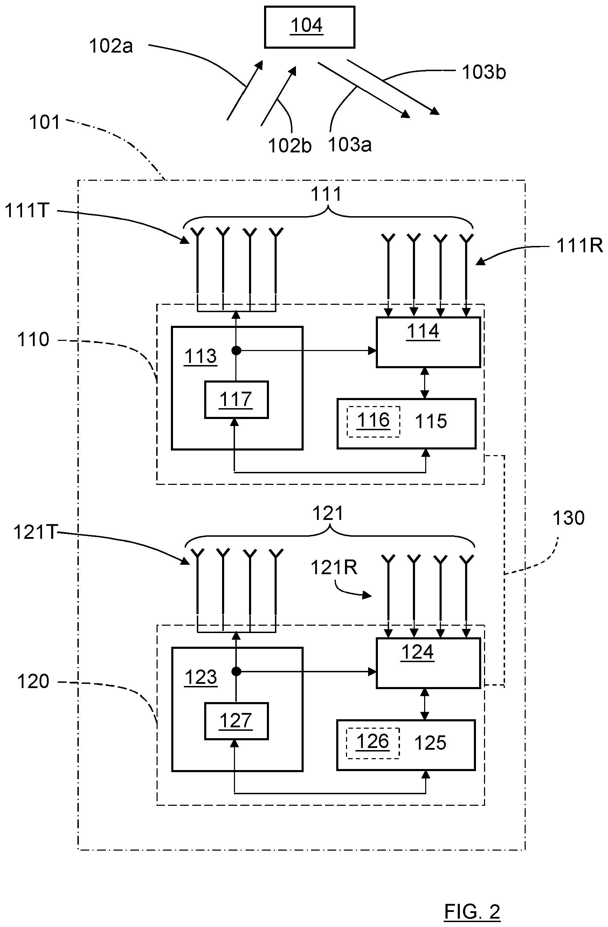

With reference to Figure 2 that illustrates the vehicle radar system 101 more in detail, the vehicle radar system 101 comprises a first antenna arrangement 111 and a second antenna arrangement 121, separate from the first antenna arrangement 111. The vehicle radar system 101 further comprises a first radar transceiver unit 110 and a second radar transceiver unit 120.

According to some aspects, the first radar transceiver unit 110 comprises a first transmitter unit 113, a first receiver unit 114 and a first processor unit 115, and the second radar transceiver unit 120 comprises a second transmitter unit 123, a second receiver unit 124 and a second processor unit 125.

According to some further aspects, each transmitter unit 113, 123 comprises a corresponding signal generator 117, 127, where each antenna arrangement 111, 121 is connected to a corresponding signal generator 117, 127. The signal generators 117, 127 are adapted to run independently of each other which enables the antenna arrangements to transmit radar waveforms that are independent of each other time and/or frequency.

According to some aspects, for the example illustrated in Figure 2, the first antenna arrangement 111 comprises a first transmitting array antenna 111T and first receiving array antenna 111R. The second antenna arrangement 121 comprises a second transmitting array antenna 121T and second receiving array antenna 121R.

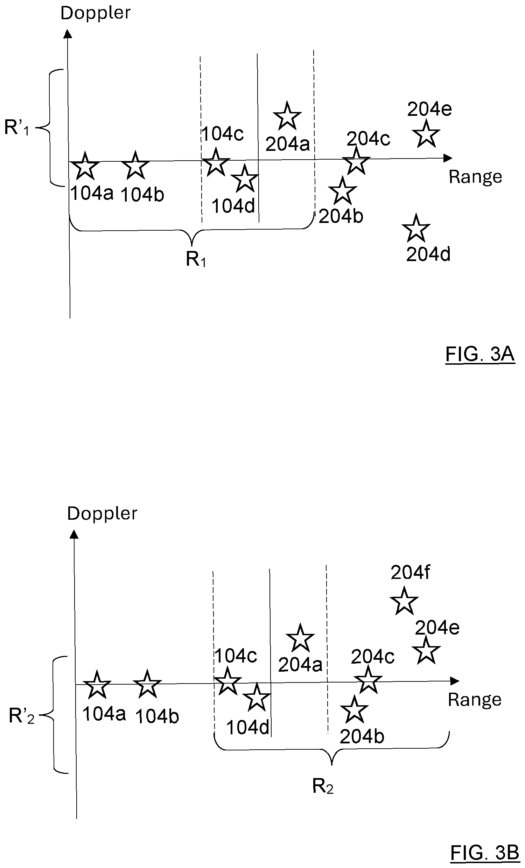

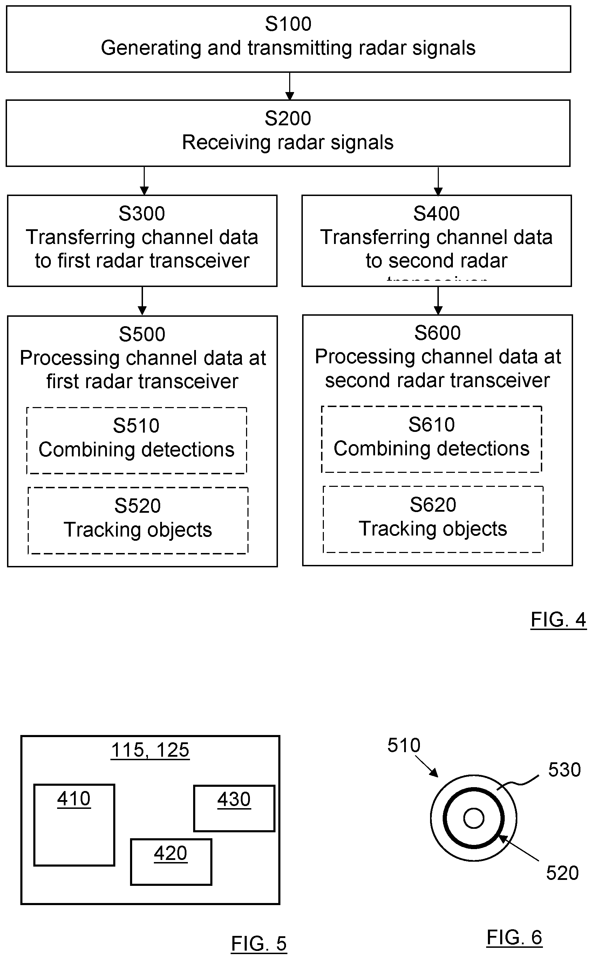

The present disclosure relates to a method performed by a processor arrangement 115, 125 in the vehicle radar system 101, for example one or both of the processor units 115, 125 mentioned above. Some parts of the processor arrangement may even be comprised in the remote server 160 or the cloud-based resource 161 mentioned above. With reference also to Figure 3A, Figure 3B and Figure 4, the method comprises generating and transmitting S100 radar signals 102 using the first radar transceiver 110, the second radar transceiver 120, the first antenna arrangement 111 and the second antenna arrangement 121, and receiving S200 radar signals 103 associated with detections 104; 104a, 104b, 104c, 104d that are associated with a first domain R₁ and detections 204; 204a, 204b, 204c, 204d, 204e, 204f that are associated with a second domain R₂, at least partly separate from the first domain R₁, using the antenna arrangements 111, 121 and the radar transceivers 110, 120.

Figure 3A illustrates a range-Doppler chart for the detections 104a, 104b, 104c, 104d 204a, 204b, 204c, 204d, 204e that are observed by the first radar transceiver 110, and Figure 3B shows a range-Doppler chart for the detections 104a, 104b, 104c, 104d 204a, 204b, 204c, 204e, 204f that are observed by the second radar transceiver 120.

According to some aspects, as shown in Figure 1, Figure 3A and Figure 3B, the first domain relates to a first range interval R₁ from the radar transceivers 110, 120, and where the second domain relates to a second range interval R₂ from the radar transceivers 110, 120, where the second range interval R₂ is farther away from the radar transceivers 110, 120 than the first range interval R₁.

According to some aspects, as shown in Figure 3A and Figure 3B, the first domain is related to a first Doppler interval R'₁, and where the second domain is related to a second Doppler interval R'2.

This means that the domains can be formed in different ways, such that the needs at hand can be taken care of.

Here the ranges R₁, R₂; R'₁, R'₂ are shown to be overlapping, which reduces the risk of some detections not being seen.

There may, according to some aspects, be a gap for one or more relatively short ranges, since target objects close by have a relatively large SNR and perhaps do not need all Rx channels.

Allowing the close range target objects to be processed on either one of the processor units 115, 125, or on the two processor units 115, 125 independently, would save on signals being sent between the processor units 115, 125, and allow more processing time to target objects that are further away. These longer range target objects can then be shared between the two processor units 115, 125 as described.

The method further comprises transferring S400, from the first radar transceiver 110 to the second radar transceiver 120, receiver channel data related to detections 204; 204a, 204b, 204c, 204d, 204e associated with the second domain R₂.

That means that in this example, when the first domain R₁ is a first range and the second domain R₂ is a second range that in this example is farther away than the first domain R₁, the long-range detections are transferred to the second radar transceiver 120.

The method also comprises processing S500, at the first radar transceiver 110, the available receiver channel data related to the detections 104; 104a, 104a 104b, 104c associated with the first domain R₁, and processing S600, at the second radar transceiver 120, the available receiver channel data related to the detections 204; 204a, 204b, 204c, 204d, 204e, 204f associated with the second domain R₂. In this example, two detections 204d, 204f are false detections.

In this context it should be understood that when processing is performed at a radar transceiver 110, 120, the processing is performed at a processor arrangement 115, 125 comprised in the radar transceiver 110, 120. The processor arrangement 115, 125 is for example constituted by one or both of the processor units 115, 125 mentioned above. Some parts of the processing functionality may even be comprised in the remote server 160 or the cloud-based resource 161 mentioned above, which then are to be regarded as comprised in the radar transceiver 110, 120.

In this way, the radar transceivers 110, 120 share one subset of the detections, which in this enables one radar transceiver, in this case the second radar transceiver 120 to double-check the detections that belong to a certain domain R₁, R₂, in this case the second domain R₂.

According to some aspects, if for example the second domain R₂ is a second range interval that in this example is farther away than the first domain R₁ that is a first range interval, this means that the detections are double-checked only for the second range interval R₂ that is farther away from the radar transceivers 110, 120, and therefore susceptible to more false detections, than the first range interval R₁.

The receiver channel data is normally of the type low level channel data.

According to some aspects, the method further comprises transferring S300, from the second radar transceiver 120 to the first radar transceiver 110, receiver channel data related to detections 104; 104a, 104b, 104c, 104d associated with the first domain R₁.

In this way, the radar transceivers 110, 120 share subsets of the detections, which enables each radar transceivers 110, 120 to double-check the detections that belong to a certain domain R₁, R₂. This means that, in this example, the close-range detections of the first range interval R₁ are transferred to the first radar transceiver 110 as well.

According to some aspects, the processing S500 at the first radar transceiver 110 comprises combining S510 the detections 104; 104a, 104b, 104c, 104d associated with the first domain R₁ such that one or more possible detected objects 104; 104a, 104b, 104c, 104d associated with the first domain R₁ can be identified. This means that the detections associated with the first domain R₁, both from the first radar transceiver 110 and the second radar transceiver 120, are combined at the first radar transceiver 110 so as to form corresponding objects.

Furthermore, the processing S600 at the second radar transceiver 120 comprises combining 610 the detections 204; 204a, 204b, 204c, 204d, 204e, 204f associated with the second domain R₂ such that one or more possible detected objects 204; 204a, 204b, 204c, 204e associated with the second domain R₂ can be identified. This means that the detections associated with the second domain R₂, both from the first radar transceiver 110 and the second radar transceiver 120, are combined at the second radar transceiver 120 so as to form corresponding objects.

This means that false detections 204d, 204f can be identified and removed and the real objects remain.

According to some aspects, the processing S500 at the first radar transceiver 110 comprises tracking S520 identified objects 104; 104a, 104b, 104c, 104d associated with the first domain R₁, and the processing S600 at the second radar transceiver 120 comprises tracking S620 identified objects 204; 204a, 204b, 204c, 204e associated with the second domain R₂.

This means that the tracking can be divided between the radar transceivers 110, 120 such that they handle one domain each.

The radar transceivers 110, 120 may mutually agree between them where the range boundary will be between them. The hysteresis or overlap described results in that some of the regions on either side of the boundary between the ranges R₁, R₂ is processed by both radar transceivers 110, 120 to allow the tracking to operate smoothly, for example by fusing the tracked objects in the overlap region.

According to some aspects, the radar transceivers 110, 120 are of the type System on Chip (SoC). Each radar transceiver 110, 120 is according to further some aspects adapted to perform 2D Fast Fourier Transform (FFT) processing on the respective Rx channel.

After the 2D FFTs are completed, local maxima are found relative to a threshold in a known way to create the detections. First estimates for azimuth and/or noise may be made at this time as well.

According to some aspects, the method further comprises lowering detection thresholds from a default value before receiving S200 radar signals 103.

This means that for longer range target objects, the detection threshold could be lowered such that weaker target objects are still found but with the consequence that more false detections would be found than normal. However, this is taken care of by means of the present disclosure by the combining S510, S610 of the detections as described above, which results in an improved detection list with false detections removed.

According to some aspects, the radar transceivers 110, 120 are connected such that they are allowed to operate coherently. This may be a wired or virtual connection 130 where the radar transceivers 110, 120 can be phase synchronized over the air.

According to some aspects, the radar transceivers 110, 120 are synchronized in time and RF frequency, such that they together act as a single 8x8 radar transceivers rather than two separate 4x4 radar transceivers. However, both alternatives are possible.

According to some aspects, the output of the tracking may be combined in one of the radar transceivers 110, 120 that may act as a master radar transceiver or master SoC, and output to vehicle systems such as for example systems for automatic driving and safety systems 170.

According to some aspects, a master radar transceiver comprises a master processor unit 115, 125 and a slave radar transceiver comprises a slave processor unit, where the master processor unit 115, 125 is adapted to form a combined result.

The slave processor unit, for example the first processor unit 115, would pass sufficient quality of signal information such that the master processor unit, for example the second processor unit 125, is able to fuse the information from the two sub-systems 110, 111; 120, 121 together. Such a fusion may take place in a number of different previously well-known ways. In an uncomplicated example, the master processor unit 125 could output to a vehicle safety system 170 a super-set of all detections from both the master processor unit 125 and the slave processor unit 115.

A more advanced fusion example could be use an association function to combine detections from the same target object 104 thereby improving the accuracy and reducing the number of detection points sent to the vehicle safety system 170. An even more advanced approach would be for the master processor unit 125 to use receiver channel information for one target object 104 from the slave processor unit 115 in order to combine with its own receiver channel information for the same target object 104 and perform either conventional angle of arrival processing or super-resolution.

This means that, according to some aspects, the master processor unit 125 is adapted to combine receiver channel information comprising received amplitude and phase, enabling the master processor unit 125 to provide combined angle processing, which could comprise super-resolution.

In the case of super-resolution, several known methods are available, some of which are based on forming a covariance matrix from the channel information in one range-Doppler cell, which in this case could be combined from multiple sub-systems. The receiving array antennas 111R, 121R may need to be identical to enable that super-resolution could function, for example the same sparse receiver antenna array could be used for the receiving array antennas 111R, 121R, with the second receiving array antenna 121R offset vertically and possibly also horizontally as indicated in Figure 3. According to some aspects, receiver channel information corresponding at least one range-Doppler cell is conveyed from the master processor unit 125 to the slave processor unit 115, and then combined at the master processor unit 125 to provide output regarding a detection or tracked target object 104 with improved accuracy and improved separation in azimuth.

With super-resolution it is possible to separate target objects from a single range-Doppler cell that could not otherwise be separated using conventional azimuth processing. Such systems benefit from any many observations of a scene as possible.

In this way, benefit can be conferred by means of the receiver channel data from both radar transceivers 110, 120.

The receiver channel data being transferred for those range-doppler cells where a target object is suspected to be present may be accompanied by receiver channel data from neighboring range bins and/or doppler bins. This is useful as information from a target will invariably spill into neighboring bins and so the neighbors help provide more precision to the range and doppler of the target objects.

Some method paths in Figure 4 are shown to run in parallel; this is of course only an example, they may instead run one after another in different orders.

The present disclosure also relates to a vehicle radar system 101 as described herein, comprising a processor arrangement 115, 125 that is adapted to perform the methods as described herein.

The present disclosure also relates to a vehicle 100 comprising the vehicle radar system 101 as described herein.

Figure 5 schematically illustrates, in terms of a number of functional units, the components of a processor unit 115, 125 according to an embodiment. Each processor unit 115, 125 may be constituted by one or more processor unit parts that can be separate from each other. Although each processor unit 115, 125 is indicated to be positioned in the vehicle 100, some processor unit parts may for example be comprised in a remote server 160 or elsewhere.

Processing circuitry 410 is provided using any combination of one or more of a suitable central processing unit (CPU), multiprocessor, microcontroller, digital signal processor (DSP), dedicated hardware accelerator, etc., capable of executing software instructions stored in a computer program product, e.g. in the form of a storage medium 420. The processing circuitry 410 may further be provided as at least one application specific integrated circuit (ASIC), or field programmable gate array (FPGA) .

Particularly, the processing circuitry 410 is configured to cause the processor unit 115, 155 to perform a set of operations, or steps. These operations, or steps, were discussed above in connection to the various vehicle radar systems and methods. For example, the storage medium 420 may store the set of operations, and the processing circuitry 410 may be configured to retrieve the set of operations from the storage medium 420 to cause the processor unit 115, 125 to perform the set of operations. The set of operations may be provided as a set of executable instructions. Thus, the processing circuitry 410 is thereby arranged to execute methods and operations as herein disclosed.

The storage medium 420 may also comprise persistent storage, which, for example, can be any single one or combination of magnetic memory, optical memory, solid state memory or even remotely mounted memory.

Each processor unit 115, 125 may further comprise a communications interface 430 for communications with at least one other unit such as for example other parts in the radar transceiver units. As such, the communications interface 430 may comprise one or more transmitters and receivers, comprising analogue and digital components and a suitable number of ports for wired or wireless communication.

The processing circuitry 410 is adapted to control the general operation of each processor unit 115, 125 e.g. by sending data and control signals to the external unit and the storage medium 420, by receiving data and reports from the external unit, and by retrieving data and instructions from the storage medium 420. Other components, as well as the related functionality, of each processor unit 115, 125 are omitted in order not to obscure the concepts presented herein.

The present disclosure also relates to a processor arrangement 115, 125, 160 comprising processing circuitry 410 arranged to execute the methods as described herein. Such a processor arrangement can be in the form of processor units 115, 125 positioned in the radar transceivers 110, 120 and/or as remote processor units such as a remote server 160. For example, that means that the methods as described herein at least partly may be executed at a remote server.

Figure 6 shows a computer program product 510 comprising computer executable instructions 520 arranged on a computer readable medium 530 to execute any of the methods as described herein.

The present disclosure also relates to a computer program 510 comprising computer program code 520 which, when executed in a processor arrangement 115, 125, 160 causes the processor arrangement 115, 125, 160 to execute the methods as described herein.

The present disclosure is not limited to the examples disclosed above, but may vary freely within the scope of the appended claims. For example, the radar vehicle radar system 101 can be an FMCW radar transceiver arrangement, but other vehicle radar modulations are also conceivable such as for example OFDM (Orthogonal Frequency-Division Multiplexing).

The array antennas 111R, 111T; 121R, 121T may according to some aspects be regarded as antenna devices 111R, 111T; 121R, 121T, and can be realized in many different ways. For example, patch antennas, dipole antennas and slot antennas, and combinations thereof, are conceivable.

## Claims

1. A method performed by a processor arrangement (115, 125) in a vehicle radar system (101), the method comprising
generating and transmitting (S100) radar signals (102) using a first radar transceiver (110), a second radar transceiver (120), a first antenna arrangement (111) and a second antenna arrangement (121);
receiving (S200) radar signals (103) associated with detections (104; 104a, 104b, 104c, 104d) that are associated with a first domain (R₁) and detections (204; 204a, 204b, 204c, 204d, 204e, 204f) that are associated with a second domain (R₂), at least partly separate from the first domain (R₁), using the antenna arrangements (111, 121) and the radar transceivers (110, 120) ;
transferring (S400), from the first radar transceiver (110) to the second radar transceiver (120), receiver channel data related to detections (204; 204a, 204b, 204c, 204d, 204e) associated with the second domain (R₂);
processing (S500), at the first radar transceiver (110), the available receiver channel data related to the detections (104; 104a, 104a 104b, 104c) associated with the first domain (R₁); and
processing (S600), at the second radar transceiver (120), the available receiver channel data related to the detections (204; 204a, 204b, 204c, 204d, 204e, 204f) associated with the second domain (R₂).

2. The method according to claim 1, further comprising transferring (S300), from the second radar transceiver (120) to the first radar transceiver (110), receiver channel data related to detections (104; 104a, 104b, 104c, 104d) associated with the first domain (R₁).

3. The method according to claim 2, wherein the processing (S500) at the first radar transceiver (110) comprises combining (S510) the detections (104; 104a, 104b, 104c, 104d) associated with the first domain (R₁) such that one or more possible detected objects (104; 104a, 104b, 104c, 104d) associated with the first domain (R₁) can be identified, and where the processing (S600) at the second radar transceiver (120) comprises combining (610) the detections (204; 204a, 204b, 204c, 204d, 204e, 204f) associated with the second domain (R₂) such that one or more possible detected objects (204; 204a, 204b, 204c, 204e) associated with the second domain (R₂) can be identified.

4. The method according to claim 3, wherein the processing (S500) at the first radar transceiver (110) comprises tracking (S520) identified objects (104; 104a, 104b, 104c, 104d) associated with the first domain (R₁), and where the processing (S600) at the second radar transceiver (120) comprises tracking (S620) identified objects (204; 204a, 204b, 204c, 204e) associated with the second domain (R₂).

5. The method according to any one of the previous claims, wherein the first domain relates to a first range interval (R₁) from the radar transceivers (110, 120), and where the second domain relates to a second range interval (R₂) from the radar transceivers (110, 120), where the second range interval (R₂) is farther away from the radar transceivers (110, 120) than the first range interval (R₁).

6. The method according to any one of the claims 1-4, wherein the first domain is related to a first Doppler interval (R'₁), and where the second domain is related to a second Doppler interval (R'₂).

7. The method according to any one of the previous claims, further comprising lowering detection thresholds from a default value before receiving (S200) radar signals (103).

8. A vehicle radar system (101) comprising a processor arrangement (115, 125) that is adapted to perform the method according to any one of the previous claims.

9. A vehicle (100) comprising the vehicle radar system (101) according to claim 8.

10. A processor arrangement (115, 125, 160) comprising processing circuitry (410) arranged to execute the method according to any one of the claims 1-7.

11. A computer program (510) comprising computer program code (520) which, when executed in a processor arrangement (115, 125, 160) causes the processor arrangement (115, 125, 160) to execute the method according to any one of the claims 1-7.
